# EUROPEAN PATENT SPECIFICATION

(11) **EP 2 088 359 B1**
(45) Date of publication and mention of the grant of the patent: **09.12.2020**
(21) Application number: 09001718.7
(22) Date of filing: 06.02.2009
(51) Int. Cl.: F16L 37/088

(54) **Tensile resistant coupler**
Zugfester Koppler
Coupleur résistant à la traction

(30) Priority: 07.02.2008 NL 2001262
(43) Date of publication of application: 12.08.2009
(73) Proprietor: Wavin B.V., 8011 CW Zwolle (NL)
(72) Inventor: Wesseling, Vincent Herman, 7742 KJ Coevorden (NL); Martens, Andries, 7731 EW Ommen (NL); Mureau, Bernardus Cornelis Hubertus, 7577 LA Oldenzaal (NL)
(74) Representative: Ferro, Frodo Nunes

(56) References cited:
- EP-A- 0 417 613
- DE-A1- 19 638 029
- US-A- 239 827
- US-A- 2 901 269
- US-A- 3 902 743
- US-A1- 2003 095 830

## Description

The invention relates to a coupler for connecting a tube in a tensile resistant manner.

Couplers of this type are known. Typically, they comprise a socket end that accommodates a clamp ring provided with a split. The clamp ring is made of a resilient material and in unloaded condition has an inner diameter which is somewhat smaller than the outer diameter of the tube to be connected. Further, the contact areas of the clamp ring and the socket end facing each other are wedge shaped. When a tube is inserted in the socket end, the clamp ring is stretched and clamps itself around the tube. If the tube is subsequently retracted out of the socket end, the wedge shaped contact area will cause the clamp ring to become wedged tighter and tighter between the tube and the enclosing socket end. Thanks to this, the clamping force on the tube is increased and disconnection thereof is prevented. Such a coupler is for example disclosed in document US2901269.

A disadvantage of this coupler is that in unloaded condition the extremities of the clamp ring (on either side of the split) may extend at least partially in the trajectory of a tube to be inserted. In such case, during insertion of the tube, the inwardly facing edges of these ring extremities may fret into the tube wall. This causes the required insertion force to increase and may moreover cause the tube to become damaged. Such damage may locally weaken the tube which may lead to unacceptable risks, especially for high pressure applications.

The invention aims to provide a coupler of the afore-described type, wherein the disadvantages of the known couplers are at least partially overcome.

This disclosure discloses a coupler that is characterised in that abutment means are provided, extending at least partially in the clamp ring's split in order to prevent free rotation of said clamp ring. As a result, the position of the split will be predefined, at least within predetermined boundaries. As a consequence, prior to being connected, the coupler may be readily manoeuvred in such way that the ring's split is situated at a most favourable position, for instance near a lower side of the socket end. In such a position, the ring extremities will abut the inner wall of the socket end under influence of gravity, and thus to a large extent be situated out of the trajectory of the tube to be inserted. Thus, the tube will be easier to insert, i.e. with a smaller force and a reduced risk of becoming damaged.

According to one aspect of the invention, at the location of the abutment means, the socket end is provided with marking means that are observable from an exterior of the socket end. Thanks to this, the location of the abutment means is immediately knowable and the ease of use of the coupler is even further enhanced because it is immediately clear in which position the coupler is to be positioned prior to insertion of a tube end.

According to the invention at least part of the abutment means are mounted in a movable manner, in such way that by moving the abutment means the ring split can be enlarged and the ring's extremities can be moved out of the trajectory of the tube end. Thanks to this, the tube may be inserted even easier, that is with an even smaller force, and insert damage may be limited to a minimum. In addition, the coupler does not need to be manoeuvred in a most favourable position first, as the position of the ring split does no longer matter. The movable abutment means may be used in a similar way to facilitate retraction of the tube by opening the clamp ring prior thereto. As such the tube can be removed quick and with minimal effort, after which the coupler is fit for reuse.

The abutment means comprise a stationary protuberance and a movable protuberance. The stationary protuberance abuts against a first extremity of the ring and the movable protuberance is brought into engagement with the second extremity of the ring in order to drive this extremity apart from the first extremity. Alternatively, in an embodiment not according to the invention, the abutment means may comprise two movably mounted protuberances, which each can engage an extremity of the ring. The or each movable protuberance may be translatable along an inner circumference of the socket end, and/or be rotatable and be provided with an eccentric circumference. Also, the abutment means may comprise a single, rotatably mounted protuberance with an eccentric outer circumference, which in a first position lies clear from both ring extremities and upon rotation comes into engagement with the extremities and upon even further rotation will drive said extremities apart.

According to a further aspect of the invention, feedback means may be provided with which for example visual, auditive and/or tactile information can be provided to a user with regard to the status of the clamp ring (opened, closed). Such feedback means may for instance be integrated in an operating mechanism for the abutment means, so that for instance from the position of this mechanism it is knowable whether the clamp ring is opened or closed. Such an immediate feedback during operation of the coupler may help to prevent mounting errors.

According to yet a further aspect of the invention, the operating mechanism lies substantially flush against or countersunk in an outer wall of the socket end, at least while the clamp ring is closed. Thanks to this, the coupler can have a substantially flush outer contour. In addition, the operating mechanism thus lies protected against unintentional operation by unforeseen external factors.

The operating mechanism may for instance comprise a handle, which while the clamp ring is opened may extend at a random angle relative to the socket end and while the clamp ring is closed, lies substantially flush against an outer wall of the socked end or is accommodated within a recess which to that end has been provided in the wall. Alternatively, the operating mechanism may for instance comprise a recessed nut which may at least essentially lie countersunk in the socket wall.

According to a further aspect of the invention, the socket end may be provided with a scrape ring. The scrape ring may be arranged to scrape along an inserted tube end so as to strip said end of dirt that possibly clings thereto.

The socket end may further be provided with one or more seal rings, so as to realize a leakproof seal between the tube and the coupler.

Further advantageous embodiments of a coupler according to the invention are set forth in the further dependent claims.

By way of illustration, exemplary embodiments of a coupler according to the invention as well as the use thereof will be further explained with reference to the drawings, wherein:
FIG. 1 shows in perspective view a coupler according to the invention;
FIG. 2 shows in longitudinal cross section a socket end according to the invention;
FIG. 3 shows in further detail the abutment means of Figure 2, in cross section along line III-III;
FIG. 4 shows the abutment means of Figure 3, in cross section along line IV-IV;
FIG. 5-7 show schematically alternative embodiments of abutment means for actively opening and closing a clamp ring, wherein only the embodiments of Fig. 5 and 6 are according to the invention;
FIG. 8 shows in longitudinal cross section a socket end according to the invention with abutment means of the type as shown in Figure 6; and
FIG. 9 shows in perspective view the abutment means of Figure 6, at least the movable par thereof, with operating mechanism.

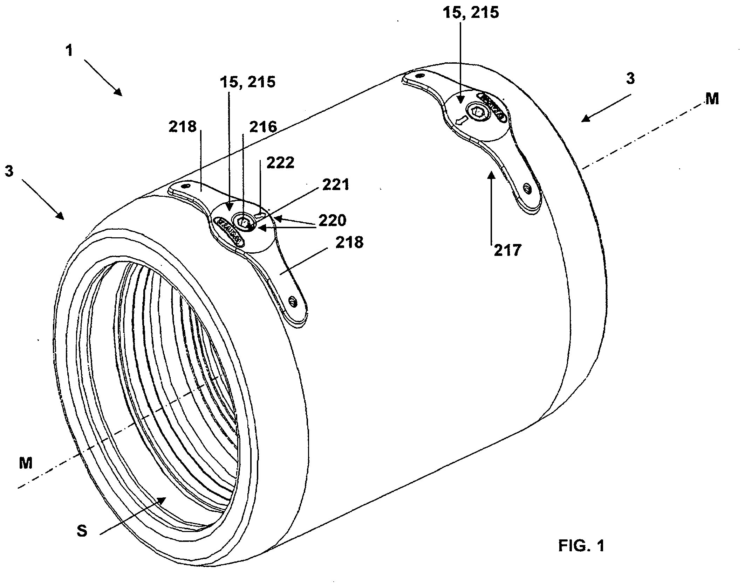

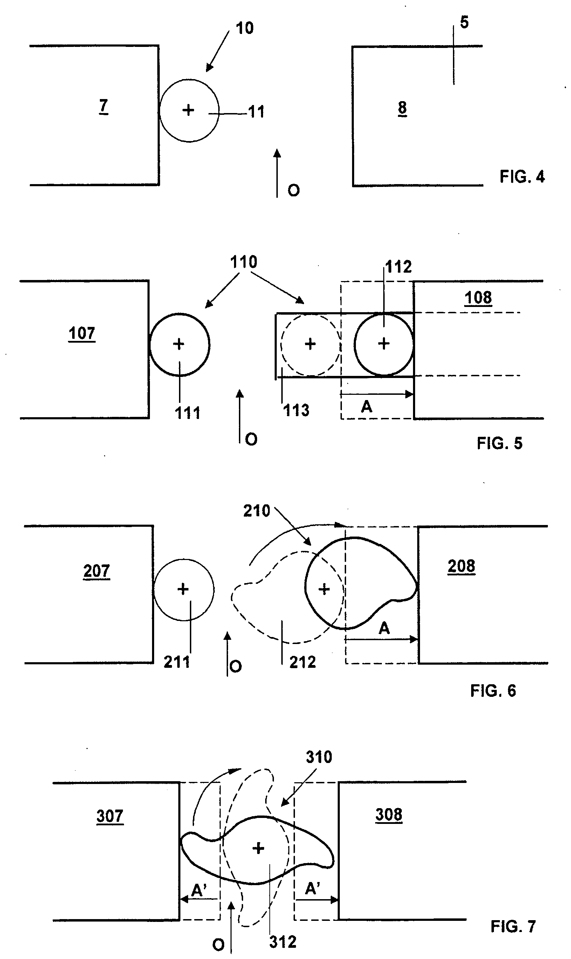

Figure 1 shows in perspective view a coupler 1 according to the invention with two socket ends 3 in which two tube ends can be connected in a tensile resistant manner. To that end, each socket end 3 comprises an operating mechanism 15 of which the function will be discussed in further detail hereinafter with reference to Figures 5-9.

In the following description only one socket end 3 will continually be described. It will however be understood that a coupler 1 according to the invention may comprise several such socket ends 3, wherein moreover the location of these socket ends with respect to one another may vary. For instance, the centre lines M of the socket ends 3 may substantially coincide (as shown in the exemplary embodiment of Figure 1) or intersect or cross each other, in case of for instance an elbow coupler or a T-shaped coupler (both not shown).

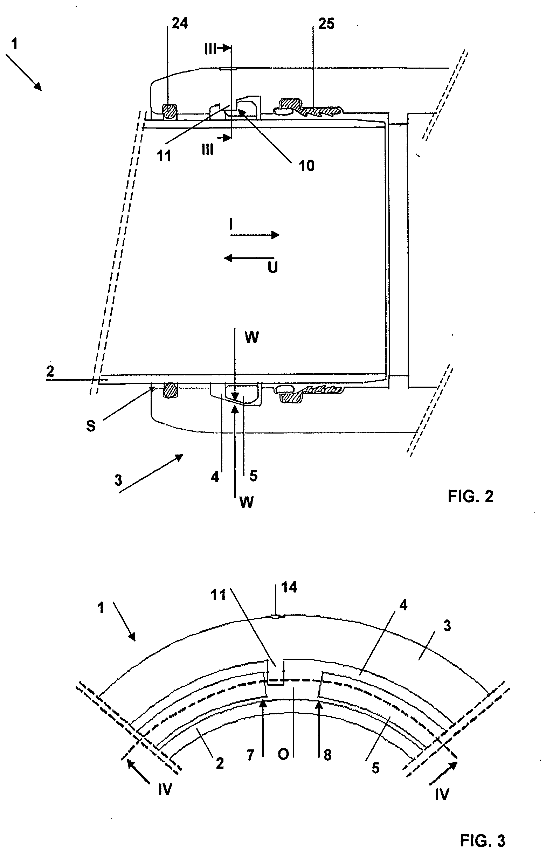

Figure 2 shows an exemplary embodiment of a socket end 3 according to the invention, in longitudinal cross section. This socket end 3 comprises an insert opening S for insertion of a tube end 2. In this description 'insert direction' I is understood to mean the direction in which a tube end 2 is inserted in the socket end 3 via the insert opening S. Retract or disconnect direction U is understood to mean the opposite direction.

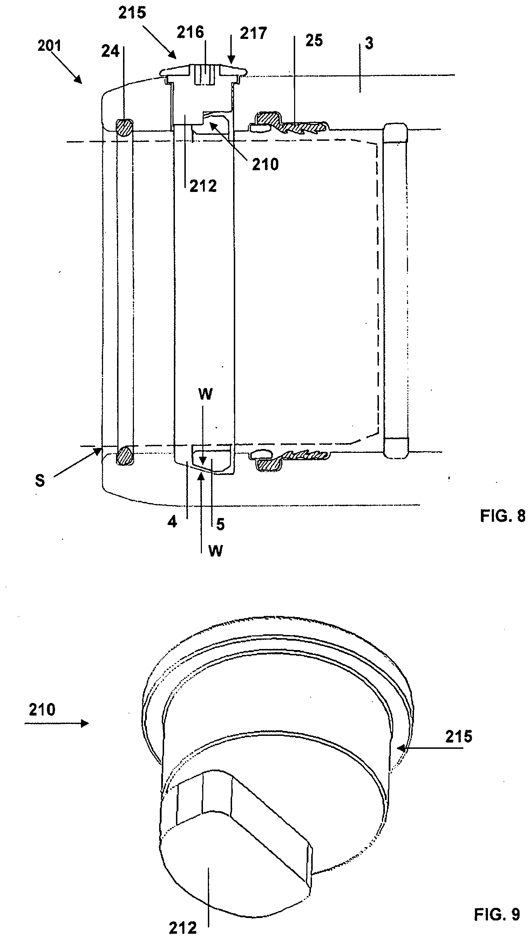

The socket end 3 is along its inner circumference at some distance of the insert opening S provided with a groove 4 and a clamp ring 5 accommodated in said groove 4. This clamp ring 5 comprises a split O (see Figure 3) and is made of a somewhat resilient material, for example metal or another material with comparable elastic properties. Thanks to this, extremities 7, 8 of the ring, situated at either side of the split O, can be resiliently moved apart or towards one another. In unloaded condition, the inner diameter of the ring 5 is somewhat smaller than the outer diameter of the tube 2 that is to be inserted. The facing contact areas W of the clamp ring 5 and the groove 4 have a conical or wedge shape (see Figures 2 and 8). If desired, the inner side of the clamp ring 5 may be provided with resistance increasing means (not shown) to resist displacement of the ring 5 along the tube 2. Such resistance increasing means are preferably designed such that they do increase the slide resistance in retract direction U, yet do not appreciably affect the slide resistance in insert direction I, so that an insert force needed for insertion of the tube 2 does not increase appreciably. To that end, the resistance increasing means may for instance be barb shaped.

The socket end 3 further comprises abutment means 10 which extend at least partially in the split O of the ring 5, in such way that they prevent or at least limit rotation of the clamp ring 5 (around centre axis M). Such abutment means may have various embodiments.

For example, in Figures 2-4 an embodiment is shown, in which the abutment means 10 comprise a stationary, substantially pin shaped protuberance 11, mounted near one of the ring extremities 7, 8. Upon rotation of the clamp ring 5, the protuberance 11 will function as abutment for one of these ring extremities 7, 8 (depending on the rotation direction) and thus limit the angle of rotation. In the socket end 3 marking means 14 may be provided, which are perceptible from an exterior of the socket end 3 so as to make the location of the abutment means 10 known to a user (and with that the location of the ring's split O).

The coupler 1 functions as follows. An end of a tube 2 is inserted in the socket end 3. This will cause the clamp ring 5 to be slightly stretched due to the somewhat bigger diameter of the tube. Owing to this, the clamp ring 5 will clamp itself resiliently around the tube 2. If the tube 2 is subsequently retracted from the socket end 3 in the direction of arrow U, the clamp ring 5 will travel with the tube 2 and be clamped tighter and tighter around the tube 2 as a result of the conical contact surface W. The clamp ring 5 thus functions as a wedge through which disconnection of the tube 2 is prevented.

Since, thanks to the abutment means 10, the location of the split O of the ring is known, at least approximately, the coupler 1 can be manoeuvred in a most favourable position prior to insertion of the tube 2, for example in a position in which the ring's split O is situated at a lower side. In such a position, the extremities 7, 8 of the ring will be received practically entirely in the groove 4 under influence of gravity. Because of this, the relatively sharp edges of these ring extremities 7, 8 will be largely situated outside the insert opening S and the trajectory of the tube 2 and the tube 2 may be readily inserted, with a relatively small force and/or without damage.

Figures 5-9 show a number of alternative embodiments of abutment means. In each of these embodiments, at least part of the abutment means is mounted in a movable way and is movable by means of an operating mechanism. By this the clamp ring 5 can be actively opened and/or closed. The illustrated abutment means are arranged in such way that with these means the clamp ring 5 can be repeatedly opened and/or closed. As a result, a tube end may not only be readily inserted in the socket end 3, but if desired, may also be readily removed there from after opening of the clamp ring 5. Components that correspond to those of the previous embodiment are indicated with corresponding reference numerals, increased with 100.

The abutment means 110 according to Figure 5 comprise a stationary protuberance in the form of a pin 111, which substantially corresponds to the previously described pin 11, and which is positioned in the ring split O, near a first extremity 107 of the ring. The abutment means 110 further comprise a second protuberance 112 that extends at least partially in the ring split O and that is movable along the inner circumference of the socket end 103 within a slot or groove 113, which to that end is provided in the socket end 103. Furthermore, an operating mechanism is provided (not shown) for acting on the protuberance 112. With this, the protuberance 112 can be displaced between a position illustrated in dashed lines in which the protuberance 112 is located near the second extremity 108 of the ring and a position in which this second extremity 108 of the ring is driven apart from the first extremity 107 of the ring, as illustrated in solid lines. Thus, the extremities 107, 108 of the ring can be actively driven apart by displacement of the protuberance 112 and the inner diameter of the clamp ring 105 can be enlarged so that a tube end 102 can be readily inserted or retracted. The operating mechanism may for instance comprise a slider which is fixedly connected to the protuberance 112 and which reaches outside the socket end 103 through the slot 113. Alternatively, the operating mechanism may comprise a rotatable handle which may be engaged and rotated from a position outside the socket end 103, wherein furthermore suitable transmission means may be provided between the handle and the protuberance 112 which transfer the rotation of the handle into a translation of the protuberance 112, such as for instance a tooth rack with a pinion or an eccentrically shaped cam.

According to the invention as shown in Figure 6, the abutment means 210 comprises a first protuberance 211, mounted stationary, similar to what is shown in Figure 4 and 5, and a second protuberance 212, mounted rotatably and provided with an eccentric outer circumference. This second protuberance 212 can be rotated between a first position (illustrated in dashed lines) in which the clamp ring 205 has not been stretched and a second position (illustrated in solid lines) in which the ring extremities 207, 208 are pushed apart. Figure 9 shows a concrete embodiment of such a rotatable protuberance 212 and an operating mechanism 215. Figure 8 shows a coupler 201 with a socket end 3 provided with such abutment means 210.

In Figure 7 a variant is shown of abutment means 310 not according to the invention, without stationary protuberances. Instead, between the ring extremities 307, 308, a rotatable protuberance 312 is provided with an eccentric outer circumference. As illustrated in dashed and solid lines, both ring extremities 307, 308 can be driven apart over a distance A' through rotation of this protuberance 312. Such an embodiment is in particular suitable if the dimensions of the ring split O are relatively small and the increase A' of the ring split O required for insertion, respectively retraction of a tube 302 is relatively small as well.

The operating mechanism 215 of the movable protuberances 212, 312 described here above may for instance comprise a handle or rotatable knob. According to an advantageous embodiment, the operating mechanism 215 may be executed as illustrated in Figures 1, 8 and 9. This operating mechanism 215 comprises a recessed nut 216 fixedly connected to the protuberance 212, 312 and extending to the exterior through an opening in the socket wall. The ensemble can be locked against removal by means of a mounting flange 217. The latter surrounds the recessed nut and may be secured to the outer wall of the socket end 3 by means of two wings 218 as illustrated in Figure 1. The design is preferably such that the flange 217 can lie substantially flush against the socket end 3 and that the recessed nut 216 is essentially protectively surrounded by the flange 217.

The coupler 1 may further comprise feedback means from which the position of the abutment means 110, 210, 310 can be read and, with that, the condition of the clamp ring 105, 205, 305 (opened or closed). The feedback means are preferably so eye-catching in nature that opening and closing of the clamp ring will not be overlooked. In the illustrated embodiment the feedback means 220 are provided on the operating mechanism 215. They comprise a first marking 221 on de recessed nut 216 and a second marking 222 on the surrounding flange 217. These markings can for example be arranged such that when they are in line with one another, the clamp ring will be closed and in all other instances the clamp ring will be opened. Of course, many other embodiments are possible. For instance, the operating mechanism can be executed such that it lies substantially within the contour of the socket end only while the clamp ring is closed and in all other instance projects noticeably. Also, use can be made of a special tool that can be removed only when the clamp ring 5 is closed.

The coupling with actively operable abutment means 110, 210, 310 functions as follows. Before inserting a tube in the socket end 103, 203, 303 the clamp ring 105, 205, 305 is actively opened by displacing and/or rotating the second protuberance 112, 212, 312. As a result, the ring split O and the inner diameter of the clamp ring 5 are increased and the trajectory of the tube 2 can be practically fully cleared. Because of this, the tube 2 can be inserted in the socket end 3 with a very small insertion force and without risk of being damaged. It will be clear that with these embodiments (with actively operable abutment means) it is not necessary to orient the coupler 101, 201, 301 in such way that the ring split O is situated at a lower side of the coupler. Once the tube end has been inserted in the socket end, the clamp ring may be readily closed by displacing and/or rotating the second protuberance back. If it is subsequently desired to remove the tube 2 from the coupler, the second protuberance 112, 212, 312 may be displaced, respectively rotated again. As a result, the clamp ring 5 will be opened and the tube 2 will be released for retraction.

All couplers described here above may further be equipped with one or more seal rings 25, which in use can sealingly extend between the tube 2 and the socket end 3 (see Figure 2 and 8). Also, a scrape ring 24 can be provided, which can remove dirt, possibly present at a tube end, when said tube end is inserted in the socket end 3. Advantage of the abutment means and the operating mechanism according to the invention is that they do not interfere with said seal and/or scrape rings and thus do not disturb the proper functioning thereof.

The invention is not in any way limited to the exemplary embodiments presented in the description and drawing. Moreover, many variations are possible within the scope of the invention as outlined by the claims.

## Claims

1. Coupler (1) for connecting a tube (2) in a tensile resistant manner, the coupler comprising at least a socket end (3) and, accommodated therein, a split clamp ring (5, 105, 205, 305), wherein the facing surfaces (W) of the socket end (3) and the clamp ring (5, 105, 205, 305) are configured to cooperate in such way that the inner diameter of the clamp ring (5, 105, 205, 305) is decreased as the ring is moved out of the socket end (3) in axial direction, wherein the coupler (1) furthermore comprises abutment means (10, 110, 210, 310), extending at least partially in the split (O) of the clamp ring (5, 105, 205, 305) **characterised in that** the abutment means comprise a stationary protuberance and a movable protuberance, the stationary protuberance abutting against a first extremity of the clamp ring, and wherein the movable protuberance can be brought into engagement with the second extremity of the ring in order to drive this extremity apart from the first extremity.

2. Coupler (1) according to claim 1, wherein marking means (14) are provided, for making known the location of the abutment means (10, 110, 210, 310) at the exterior of the socket end (3).

3. Coupler (1) according to anyone of the preceding claims, wherein the abutment means (210, 310) comprise a rotatably mounted protuberance (212,312), with an eccentric outer circumference.

4. Coupler (1) according to anyone of the preceding claims, wherein the abutment means (110, 210, 310) form part of an operating mechanism (15, 215) for opening and possibly closing the clamp ring (5, 105, 205, 305) so that an inner diameter of the clamp ring (5, 105, 205, 305) is increased, respectively decreased.

5. Coupler (1) according to claim 4, wherein the operating mechanism (15, 215) extends through a circumferential wall of the socket end (3).

6. Coupler (1) according to claim 4 or 5, wherein the operating mechanism (15, 215) comprises feedback means (220) from which it is knowable whether the clamp ring (5, 105, 205, 305) is opened or closed.

7. Coupler (1) according to anyone of claims 4-6, wherein it is knowable from a position of the operating mechanism (15, 215) whether the clamp ring (5, 105, 205, 305) is opened or closed.

8. Coupler (1) according to anyone of claims 4-7, wherein the operating mechanism (15, 215) lies flush against a circumferential wall of the socket end (3) or substantially countersunk therein, at least while the clamp ring (5, 105, 205, 305) is closed.

9. Coupler (1) according to anyone of claims 4-8, wherein the operating mechanism (15, 215) comprises a recessed nut (216).

10. Coupler (1) according to claim 6 and 9, wherein the feedback means (220) comprise a first marking (221) on the recessed nut (216) and a second marking (222) on a surrounding flange (217), the surrounding flange (217) by means of which the operating mechanism is locked against removal.

11. Coupler (1) according to anyone of the preceding claims, wherein the socket end (3) comprises a seal ring (25) which, seen in insert direction (I), is located behind the clamp ring (5, 105, 205, 305) so that a tube end (2) that in use is inserted in the socket end (3) first passes the clamp ring (5, 105, 205, 305) and subsequently the seal ring (25).

12. Coupler (1) according to anyone of the preceding claims, wherein the socket end (3) comprises a scrape ring, situated between the clamp ring (5, 105, 205, 305) and an insert opening (S) of the socket end (3).

13. Assembly of a coupler (1) according to anyone of the preceding claims and at least one tube (2) which is connectable or connected in a socket end (3) of the coupler (1) in a tensile resistant manner.

## Patentansprüche

1. Kupplungselement (1) zum Verbinden eines Rohrs (2) auf zugfeste Weise, wobei das Kupplungselement mindestens ein Anschlussende (3) und, darin aufgenommen, einen geteilten Klemmring (5, 105, 205, 305) umfasst, wobei die einander zugewandten Flächen (W) des Anschlussendes (3) und des Klemmrings (5, 105, 205, 305) ausgestaltet sind, derart zusammenzuwirken, dass sich der Innendurchmesser des Klemmrings (5, 105, 205, 305) verringert, wenn der Ring in axialer Richtung aus dem Anschlussende (3) bewegt wird, wobei das Kupplungselement (1) ferner Anschlagmittel (10, 110, 210, 310) umfasst, die sich zumindest teilweise in die Teilung (O) des Klemmrings (5, 105, 205, 305) erstrecken, **dadurch gekennzeichnet, dass** die Anschlagmittel einen feststehenden Vorsprung und einen beweglichen Vorsprung umfassen, wobei der feststehende Vorsprung gegen ein erstes äußerstes Ende des Klemmrings anstößt, und wobei der bewegliche Vorsprung mit dem zweiten äußersten Ende des Rings in Eingriff bringbar ist, um dieses äußerste Ende von dem ersten äußersten Ende weg zu treiben.

2. Kupplungselement (1) nach Anspruch 1, wobei Markierungsmittel (14) zum Kennzeichnen der Lage der Anschlagmittel (10, 110, 210, 310) an der Außenseite des Anschlussendes (3) bereitgestellt sind.

3. Kupplungselement (1) nach einem der vorhergehenden Ansprüche, wobei die Anschlagmittel (210, 310) einen drehbar angebrachten Vorsprung (212, 312) mit einem exzentrischen Außenumfang umfassen.

4. Kupplungselement (1) nach einem der vorhergehenden Ansprüche, wobei die Anschlagmittel (110, 210, 310) einen Teil eines Betätigungsmechanismus (15, 215) zum Öffnen und möglicherweise Schließen des Klemmrings (5, 105, 205, 305) derart bilden, dass sich ein Innendurchmesser des Klemmrings (5, 105, 205, 305) vergrößert bzw. verringert.

5. Kupplungselement (1) nach Anspruch 4, wobei sich der Betätigungsmechanismus (15, 215) durch eine Umfangswand des Anschlussendes (3) erstreckt.

6. Kupplungselement (1) nach Anspruch 4 oder 5, wobei der Betätigungsmechanismus (15, 215) Rückmeldungsmittel (220) umfasst, aus denen erkenntlich ist, ob der Klemmring (5, 105, 205, 305) geöffnet oder geschlossen ist.

7. Kupplungselement (1) nach einem der Ansprüche 4-6, wobei aus einer Position des Betätigungsmechanismus (15, 215) erkenntlich ist, ob der Klemmring (5, 105, 205, 305) geöffnet oder geschlossen ist.

8. Kupplungselement (1) nach einem der Ansprüche 4-7, wobei der Betätigungsmechanismus (15, 215) bündig an einer Umfangswand des Anschlussendes (3) anliegt oder im Wesentlichen darin versenkt ist, zumindest solange der Klemmring (5, 105, 205, 305) geschlossen ist.

9. Kupplungselement (1) nach einem der Ansprüche 4-8, wobei der Betätigungsmechanismus (15, 215) eine ausgesparte Mutter (216) umfasst.

10. Kupplungselement (1) nach Anspruch 6 und 9, wobei die Rückmeldungsmittel (220) eine erste Markierung (221) an der ausgesparten Mutter (216) und eine zweite Markierung (222) an einem umgebenden Flansch (217) umfassen, wobei mittels des umgebenden Flansches (217) der Betätigungsmechanismus gegen Entfernung arretiert ist.

11. Kupplungselement (1) nach einem der vorhergehenden Ansprüche, wobei das Anschlussende (3) einen Dichtring (25) umfasst, der, in Einsetzrichtung (I) gesehen, hinter dem Klemmring (5, 105, 205, 305) derart angeordnet ist, dass ein Rohrende (2), das im Einsatz in das Anschlussende (3) eingesetzt wird, zuerst den Klemmring (5, 105, 205, 305) und anschließend den Dichtring (25) passiert.

12. Kupplungselement (1) nach einem der vorhergehenden Ansprüche, wobei das Anschlussende (3) einen Abstreifring umfasst, der sich zwischen dem Klemmring (5, 105, 205, 305) und einer Einsetzöffnung (S) des Anschlussendes (3) befindet.

13. Anordnung eines Kupplungselements (1) nach einem der vorhergehenden Ansprüche und mindestens eines Rohrs (2), das in einem Anschlussende (3) des Kupplungselements (1) auf zugfeste Weise verbindbar oder verbunden ist.

## Revendications

1. Coupleur (1) pour relier un tube (2) de manière résistante à la traction, le coupleur comprenant au moins une extrémité de douille (3) et, logée dans celle-ci, une bague de serrage fendue (5, 105, 205, 305), les surfaces en regard (W) de l'extrémité de douille (3) et de la bague de serrage (5, 105, 205, 305) étant conçues pour coopérer de sorte que le diamètre intérieur de la bague de serrage (5, 105, 205, 305) diminue lorsque la bague est déplacée hors de l'extrémité de douille (3) dans la direction axiale, le coupleur (1) comprenant en outre un moyen de butée (10, 110, 210, 310), s'étendant au moins partiellement dans la fente (O) de la bague de serrage (5, 105, 205, 305), **caractérisé en ce que** le moyen de butée comprend une saillie fixe et une saillie mobile, la saillie fixe venant en butée contre une première extrémité de la bague de serrage, et la saillie mobile pouvant être mise en prise avec la seconde extrémité de la bague afin d'entraîner cette extrémité à l'opposé de la première extrémité.

2. Coupleur (1) selon la revendication 1, un moyen de marquage (14) étant fourni, pour faire connaître l'emplacement du moyen de butée (10, 110, 210, 310) à l'extérieur de l'extrémité de douille (3).

3. Coupleur (1) selon l'une quelconque des revendications précédentes, le moyen de butée (210, 310) comprenant une saillie (212, 312) montée de manière rotative, avec une circonférence extérieure excentrique.

4. Coupleur (1) selon l'une quelconque des revendications précédentes, le moyen de butée (110, 210, 310) faisant partie d'un mécanisme de fonctionnement (15, 215) pour ouvrir et éventuellement fermer la bague de serrage (5, 105, 205, 305) de sorte qu'un diamètre intérieur de la bague de serrage (5, 105, 205, 305) soit augmenté, respectivement diminué.

5. Coupleur (1) selon la revendication 4, le mécanisme de fonctionnement (15, 215) s'étendant à travers une paroi circonférentielle de l'extrémité de douille (3).

6. Coupleur (1) selon la revendication 4 ou 5, le mécanisme de fonctionnement (15, 215) comprenant un moyen de rétroaction (220) à partir duquel il est possible de savoir si la bague de serrage (5, 105, 205, 305) est ouverte ou fermée.

7. Coupleur (1) selon l'une quelconque des revendications 4 à 6, une position du mécanisme de fonctionnement (15, 215) permettant de savoir si la bague de serrage (5, 105, 205, 305) est ouverte ou fermée.

8. Coupleur (1) selon l'une quelconque des revendications 4 à 7, le mécanisme d'actionnement (15, 215) étant affleurant contre une paroi circonférentielle de l'extrémité de douille (3) ou sensiblement noyé dans celle-ci, au moins lorsque la bague de serrage (5, 105, 205, 305) est fermée.

9. Coupleur (1) selon l'une quelconque des revendications 4 à 8, le mécanisme d'actionnement (15, 215) comprenant un écrou en creux (216).

10. Coupleur (1) selon les revendications 6 et 9, le moyen de rétroaction (220) comprenant un premier marquage (221) sur l'écrou en creux (216) et un second marquage (222) sur une bride périphérique (217), bride périphérique (217) au moyen de laquelle le mécanisme de fonctionnement est bloqué contre tout retrait.

11. Coupleur (1) selon l'une quelconque des revendications précédentes, l'extrémité de douille (3) comprenant une bague d'étanchéité (25) qui, vue dans la direction d'insertion (I), est située derrière la bague de serrage (5, 105, 205, 305) de sorte qu'une extrémité de tube (2) qui, lors de l'utilisation, est insérée dans l'extrémité de douille (3) passe d'abord la bague de serrage (5, 105, 205, 305) et ultérieurement la bague d'étanchéité (25).

12. Coupleur (1) selon l'une quelconque des revendications précédentes, l'extrémité de douille (3) comprenant une bague de raclage, située entre la bague de serrage (5, 105, 205, 305) et une ouverture d'insertion (S) de l'extrémité de douille (3).

13. Ensemble d'un coupleur (1) selon l'une quelconque des revendications précédentes et d'au moins un tube (2) qui peut être raccordé ou qui est raccordé dans une extrémité de douille (3) du coupleur (1) d'une manière résistant à la traction.
